# EUROPEAN PATENT APPLICATION

(11) **EP 4 755 702 A1**
(43) Date of publication of application: **10.06.2026**
(21) Application number: 24217933.1
(22) Date of filing: 06.12.2024
(51) Int. Cl.: B60L 53/30, B60L 53/35

(54) **A SEMI-MOBILE EV CHARGING SYSTEM**

(71) Applicant: Ikrautas, Uab, 08200 Vilnius (LT)
(72) Inventor: Guzys, Paulius, Vilnius (LT)
(74) Representative: AAA Law

(57) **Abstract**

A semi-mobile electric vehicle charging system comprising a hollow rail profile for conducting electrical energy and rail-mounted charging equipment comprising a carriage unit, comprising a first frame comprising at least one sliding contact, connecting means for connecting the sliding contacts with the charging unit, and first rolling means, and a second frame comprising a charging unit disposed therein, second rolling means and attachment means, where the first rolling means of the first frame are disposed on the rolling surface in the rail for supporting the first frame on the rail, and the second rolling means of the second frame are disposed on the rolling surface in the rail for supporting the second frame on the rail, where the first frame is situated between the second frame and upper wall of the rail and between the second rolling means and the attachment means of the second frame.

## Description

### TECHNICAL FIELD

The invention relates to a semi-mobile EV charging system, in particular to semi-mobile track-type charging system for charging electric vehicles.

### BACKGROUND ART

There are two main types of charging equipment available on the market. One is a fixed charging system. The advantage is that it has high power and fast charging speed. The disadvantage is that it can only use fixed parking spaces. The cable length can be increased to reach further stations from the stationary charging point, but in this case, users do not necessarily have long cables with them (usually 5m). Long cables are not convenient because they are heavy, and one can get dirty clothes while operating it. It is also inconvenient for the user to take it neatly to other users after use. A cable left untidy can be broken/damaged by other users through carelessness. For example, running over it with a car wheel, when it was left in a mess after use. Also, if the parking space is occupied, it cannot be charged. The other is a semi-mobile charging system which operates on a horizontal rail. The advantage is that one unit can charge electric vehicles at several spots.

Patent application, publication No.: CN111267652, discloses a rail-mounted mobile charging equipment for parking lot. The rail-mounted mobile charging equipment comprises a central control system, charging track equipment and a mobile charging device, and the charging track equipment comprises a warehouse track used for storing the mobile charging device, a transmission track used for transmitting the mobile device and a position sensor used for detecting a position of the mobile charging device. The mobile charging device comprises a shell, a charging pile body arranged in the shell, a driving device arranged on the shell, matched with the electric rail equipment and used for driving the mobile charging device to move, and a micro-control unit used for being communicated with a central control system, the charging pile body is electrically connected with a charging gun, the transmission track is connected with a warehouse track and is laid at each parking space, and the central control system comprises a delivery control system for managing the mobile charging device and a parking management system. Main disadvantage of the system is that it is not protected from damage to the contacts of the electric rail and the charging device while being moved.

The present invention is dedicated to overcoming of the above shortcomings and for producing further advantages over prior art.

### BRIEF DESCRIPTION OF THE INVENTION

The invention relates to a semi-mobile track-type charging system for charging electric vehicles.

The semi-mobile electric vehicle charging system comprises a hollow rail profile and rail-mounted charging equipment comprising a carriage unit, comprising a first frame comprising at least one sliding contact, connecting means for connecting the sliding contacts with the charging unit, and first rolling means, and a second frame comprising a charging unit disposed therein, second rolling means and attachment means. The rolling means of the first frame, being first rolling means, are disposed on the rolling surface in the rail for supporting the first frame on the rail and the rolling means of the second frame, being the second rolling means, are disposed on the rolling surface in the rail for supporting the second frame on the rail. The first frame is situated between the second frame and upper wall of the rail and between the second rolling means and the attachment means of the second frame.

As the charging unit is being positioned for operation or moved to another position, the second frame is pushed or dragged by a user thus acting on the second rolling means and attachment means of the second frame with linear force which can potentially affect flow of electrical currency between the current feed line and the sliding contacts of the carriage unit, i.e. make the carriage unit sway thus endangering the interface contact between the current feed line and the sliding contacts if only the second frame would have the supporting rolling means and attachment means. Supporting the sliding contacts on a separate support, i.e. the first rolling means, protects the first frame from forces which act upon the second frame and thus main body part of the carriage unit, keeping the contact interface between the contact between the current feed line and the sliding contacts reliably engaged.

### BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

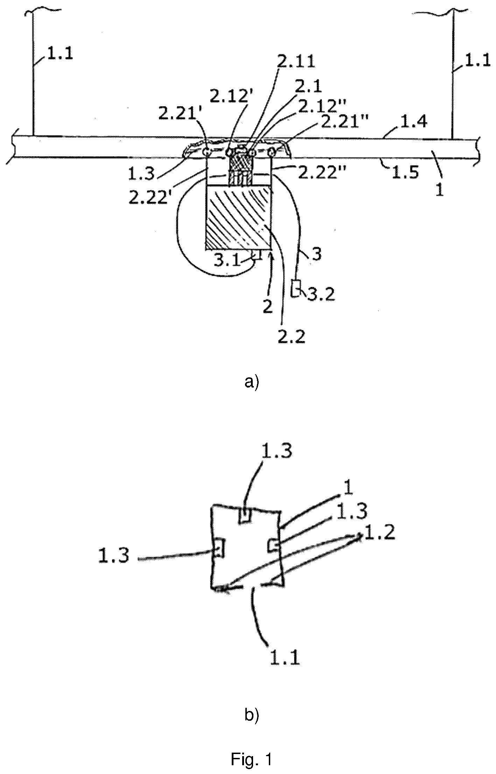

Fig. 1 shows a) principal scheme of the system according to the invention with a cut-out showing inside of a hollow rail profile; b) cross section of the hollow rail profile of the system according to the invention.

Preferred embodiments of the invention will be described herein below with reference to the drawings. Each figure contains the same numbering for the same or equivalent element.

### DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

An electric vehicle charging system, according to the invention, comprises a hollow rail profile (1) comprising a gap (1.1) extending through entire length of the rail (1), rolling surface (1.2) on both sides of the gap (1.1) and at least one electrical current feed line (1.3), extending through the entire length of the rail (1). The electric vehicle charging system further comprises a carriage unit (2), comprising a first frame (2.1) comprising at least one sliding contact (2.11) and rolling means (2.12', 2.12"), being the first rolling means (2.12', 2.12"), and a second frame (2.2) comprising further rolling means (2.21', 2.21"), being the second rolling means (2.21', 2.21"), and attachment means (2.22', 2.22"). The electric vehicle charging system also comprises a charging cable (3) having a first end (3.1) connected to a charging unit (not shown) located inside the second frame (2.2) and a second end comprising a charging plug (3.2).

The hollow rail profile (1) is configured for attaching to a ceiling (not shown) of a structure for parking an electrical vehicle or other overhead structure like ceiling beams, an array of posts, etc., via attachment means (1.1) which are rigid attachment means such as steel rods, bolts, ceiling elements such as protrusions or alike. The attachment means (1.1) are intended for rigidly attaching the rail (1) to an overhead structure so that the rail (1) would be in a fixed and stable position essentially free of sway.

The gap (1.1) extending through entire length of the rail (1) is formed in one wall of the rail (1), preferably a bottom wall (1.5). The bottom wall (1.5) is the wall opposite a top wall (1.4) which is facing the overhead structure, and the rail (1) is attached to the overhead structure via the attachment means connecting the top wall (1.4) and the overhead structure. The rolling surfaces (1.2) are formed on the sides of the gap (1.1). The said sides of the gap (1.1) are inner surfaces of the rail (1.1) directed towards the top wall (1.4). The at least one electrical current feed line (1.3), extending through the entire length of the rail (1) is electrically insulated from the rail (1) body. The at least one current feed line (1.3) receives electric current from electric current source (not shown) for providing electric current along surface of the current feed line (1.3) for directing the electric current to electric current receiving sliding contacts (2.11)

The first frame (2.1) of the carriage unit (2) comprises at least one sliding contact (2.11) for sliding along electric current conducting surface of the current feed line (1.3) and for receiving electric current from the current feed line (1.3). The so transferred electric current is further transferred via electric cables to a charging unit (not shown) located in the second frame (2.2) of the electric vehicle charging system.

The rolling means (2.12', 2.12") of the first frame (2.1) are disposed on the rolling surface (1.2) for rolling motion in the rail (1) and for supporting the first frame (2.1) on the rail (1). The first frame (2.1) is linked with the first rolling means (2.12', 2.12") via attachment points of the first frame (2.1) where the attachment points are part of the first frame (2.1) or separate elements attached to the first frame (2.1). The first frame (2.1) may be disposed essentially between the first rolling means (2.12', 2.12") or the attachment points of the first frame (2.1) are disposed so that the first rolling means (2.12', 2.12") are disposed longitudinally along the rail (1) length at the length of the first frame (2.1), wider than the length of the first frame (2.1) or narrower than the length of the first frame (2.1). The position of the first rolling means (2.12', 2.12") is such that allows the first frame (2.1) only the longitudinal translation motion along the rail (1) when the first frame (2.1) is hanging in the rail (1) by the first rolling means (2.12', 2.12").

The rolling means (2.21', 2.21 ") of the second frame (2.2) are disposed on the rolling surface (1.2) for rolling motion in the rail (1) and for supporting the second frame (2.2) on the rail (1). The second frame (2.2) is linked with the second rolling means (2.21) via attachment means (2.22) of the second frame (2.2) where the attachment means (2.22) are part of the second frame (2.2) or separate elements attached to the second frame (2.2). The second frame (2.2) is disposed in relation to the second rolling means (2.21', 2.21") and the attachment means (2.22', 2.22") of the second frame (2.2) so that the second rolling means (2.21', 2.21") are disposed longitudinally along the rail (1) length at the length of the second frame (2.2), wider than the length of the second frame (2.2), or narrower than the length of the second frame (2.2). The position of the second rolling means (2.21', 2.21") is such that allows the second frame (2.2) only the longitudinal translation motion along the rail (1) when the second frame (2.2) is in hanging position in the rail (1).

The first frame (2.1) is situated between the second frame (2.2) and upper wall (1.4) of the rail (1) and between the second rolling means (2.21', 2.21") and the attachment means (2.22', 2.22") of the second frame (2.2).

Configuration of four support means, i.e. first rolling means (2.12', 2.12") and second rolling means (2.21', 2.21") with corresponding attachments to the corresponding firs frame (2.1) and second frame (2.2), where the first frame (2.1) is disposed as described above with respect the second frame (2.2), gives enhanced stability for the carriage unit (2) when the carriage unit (2) is being moved along the rail (1).

The rail (1) is preferably made of rigid and electrically insulating material, such as plastic, plastic composites, etc.

The first rolling means (2.12', 2.12") and he second rolling means (2.21', 2.21") are preferably electrically non-conductive such as plastic rollers.

The charging unit is disposed in the second frame (2.2) so that the second rolling means (2.21', 2.21") are mainly supporting the charging unit. The first frame (2.1) mainly supports the sliding contacts (2.11) and connecting means for connecting the sliding contacts (2.11) with the charging unit. This configuration increases safety of the operation of the charging system as the weight is distributed along four supporting points distinctively supporting the first frame (2.1) comprising the sliding contacts (2.11) and connecting means for connecting the sliding contacts (2.11) with the charging unit separately from the second frame (2.2) comprising the charging unit with the charging cable (3) having a first end (3.1) connected to the charging unit (not shown) and a second end comprising the charging plug (3.2).

As the charging unit is being positioned for operation or moved to another position, the second frame (2.2) is pushed or dragged by a user thus acting on the second rolling means (2.21', 2.21") and attachment means (2.22', 2.22") of the second frame (2.2) with linear force. The linear force can potentially affect flow of electrical currency between the current feed line (1.3) and the sliding contacts of the carriage unit (2), i.e. make the carriage unit (2) sway. Supporting the sliding contacts (2.11) on a separate support, i.e. the first rolling means (2.12', 2.12"), protects the first frame (2.1) from forces which act upon the second frame (2.2) and thus main body part of the carriage unit (2), keeping the contact interface between the current feed line (1.3) and the sliding contacts (2.11) reliably engaged.

The electric vehicle charging system according to the invention further comprises a control unit (not shown) for control of operation of the charging unit and flow of electric current to the electric vehicle when it is charged and stop of electric current flow to the charging plug when the electric vehicle is not plugged.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

## Claims

1. A semi-mobile electric vehicle charging system comprising a hollow rail profile for conducting electrical energy, the hollow rail profile comprising a gap extending through entire length of the rail, rolling surface on both sides of the gap and at least one electrical current feed line extending through the entire length of the rail, and rail-mounted charging equipment, **characterised in that** the rail-mounted charging equipment comprises
a carriage unit (2), comprising
a first frame (2.1) comprising at least one sliding contact (2.11), connecting means for connecting the sliding contacts (2.11) with a charging unit, and first rolling means (2.12', 2.12"), and
a second frame (2.2) comprising a charging unit disposed therein, second rolling means (2.21', 2.21") and attachment means (2.22', 2.22"),
where the first rolling means (2.12', 2.12") are disposed on the rolling surfaces (1.2) for rolling motion in the rail (1) and for supporting the first frame (2.1) on the rail (1), and the second rolling means (2.21', 2.21") are disposed on the rolling surfaces (1.2) for rolling motion in the rail (1) and for supporting the second frame (2.2) on the rail (1), and
where the first frame (2.1) is situated between the second frame (2.2) and upper wall (1.4) of the rail (1) and between the second rolling means (2.21', 2.21") and the attachment means (2.22', 2.22") of the second frame (2.2).

2. System according to claim 1, where the first frame (2.1) is linked with the first rolling means (2.12', 2.12") via attachment points of the first frame (2.1) where the attachment points are part of the first frame (2.1) or separate elements attached to the first frame (2.1).

3. System according to claim 1 or 2, where the first frame (2.1) is disposed so that the first rolling means (2.12', 2.12") are disposed longitudinally along the rail (1) length at the length of the first frame (2.1) or wider than the length of the first frame (2.1) or narrower than the length of the first frame (2.1).

4. System according to any one of the preceding claims, where the second frame (2.2) is disposed in relation to the second rolling means (2.21', 2.21") and the attachment means (2.22', 2.22") of the second frame (2.2) so that the second rolling means (2.21', 2.21") are disposed longitudinally along the rail (1) length at the length of the second frame (2.2) or wider than the length of the second frame (2.2) or narrower than the length of the second frame (2.2).

5. System according to any one of the preceding claims, where a charging cable (3) is connected at one end to the charging unit located inside the second frame (2.2) and at second end to a charging plug (3.2).

6. System according to any one of the preceding claims, where the rail (1) is made of rigid and electrically insulating material.

7. System according to any one of the previous claims, where the first rolling means (2.12', 2.12") and he second rolling means (2.21', 2.21") are electrically non-conductive plastic rollers.
